(19) Europäisches Patentamt
European Patent Office
Office européen des brevets

(11) **EP 1 085 994 B1**

(12) **EUROPÄISCHE PATENTSCHRIFT**

(45) Veröffentlichungstag und Bekanntmachung des Hinweises auf die Patenterteilung:
**16.07.2003 Patentblatt 2003/29**

(21) Anmeldenummer: **00922548.3**

(22) Anmeldetag: **25.03.2000**

(51) Int Cl.⁷: **B60K 6/04**, B60K 17/02, B60K 17/08, B60K 41/00, F16H 37/02

(86) Internationale Anmeldenummer:
**PCT/EP00/02654**

(87) Internationale Veröffentlichungsnummer:
**WO 00/059750 (12.10.2000 Gazette 2000/41)**

(54) **ANTRIEBSANORDNUNG**

DRIVE ASSEMBLY

DISPOSITIF DE COMMANDE

(84) Benannte Vertragsstaaten:
**AT BE CH CY DE DK ES FI FR GB GR IE IT LI LU MC NL PT SE**

(30) Priorität: **06.04.1999 DE 19915370**

(43) Veröffentlichungstag der Anmeldung:
**28.03.2001 Patentblatt 2001/13**

(73) Patentinhaber: **Höhn, Bernd-Robert, Prof.Dr.-Ing.**
**81925 München (DE)**

(72) Erfinder: **Höhn, Bernd-Robert, Prof.Dr.-Ing.**
**81925 München (DE)**

(56) Entgegenhaltungen:
**EP-A- 0 445 873          DE-A- 2 943 532**
**DE-A- 3 231 882          DE-A- 4 342 735**

## Beschreibung

Die Erfindung betrifft eine Antriebsanordnung, insbesondere für Kraftfahrzeuge, gemäß dem Oberbegriff des Patentanspruches 1, sowie ein Verfahren zum Betreiben eines Kraftfahrzeuges mit einer derartigen Antriebsanordnung.

Eine Hybrid-Antriebsanordnung zeigt die DE 29 43 532 A1 mit einer Brennkraftmaschine als erster Antriebsquelle, einem Elektromotor als zweite Antriebsquelle und einem Umschlingungsgetriebe als stufenloses Getriebe. Dabei wirkt die Brennkraftmaschine über eine Kupplung auf das erste Wandlerelement bzw. auf das Antriebsscheibenpaar des Umschlingungsgetriebes, während das über ein Umschlingungsmittel angetriebene Abtriebscheibenpaar als zweites Wandlerelement mit der Abtriebswelle verbunden ist. Der Elektromotor ist ebenfalls direkt mit dem Antriebsscheibenpaar trieblich verbunden. Mit dieser Antriebsanordnung kann z. B. über den Elektromotor mit Ausnutzung der Getriebespreizung des Umschlingungsgetriebes das Kraftfahrzeug angefahren und im unteren Geschwindigkeitsbereich betrieben werden. Durch Schließen der brennkraftmaschinenseitigen Kupplung kann die Brennkraftmaschine dann dazugeschaltet und ggf. der Elektromotor als Generator umgeschaltet werden. Auch über die Brennkraftmaschine kann die Getriebespreizung entsprechend durchfahren werden. Eine weitere Hybrid-Antriebsanordnung zeigt die gattungsgemäße DE 43 42 735 A1.

Aufgabe der vorliegenden Erfindung ist es, die gattungsgemäße Antriebsanordnung einfacher und Kompakter zu gestalten.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar. Mit den Patentansprüchen 8 bis 10 wird ferner ein vorteilhaftes Verfahren zum Betreiben eines Kraftfahrzeuges mit der erfindungsgemäßen Antriebsanordnung vorgeschlagen, mit dem günstige Wirkungsgrade der Antriebsquellen verwirklichbar und die Emission schädlicher Abgase im Nahverkehrsbereich bzw. im Stadtverkehr verminderbar sind.

Durch die erfindungsgemäßen Maßnahmen gemäß Patentanspruch 1 wird. der besondere Vorteil erreicht, daß das stufenlose Getriebe (z. B. ein Toroidoder Umschlingungsgetriebe) in Umkehrung des Kraftflusses von der ersten oder der zweiten Antriebsquelle, im folgenden als Brennkraftmaschine und Elektromotor bezeichnet, durchfahren wird, wobei folgende Funktionen durch einfaches Schalten von Kupplungen möglich sind:

1. Antrieb nur über den Elektromotor zum Anfahren sowohl Vorwärts als auch Rückwärts und Fahren im Stadtbereich;

2. Antrieb nur über die Brennkraftmaschine, insbesondere bei höheren Geschwindigkeiten, ggf. aber auch zum Anfahren (Notbetrieb);

3. Antrieb über beide Antriebsquellen bei extremer Beschleunigung;

4. Starten der Brennkraftmaschine mittels des Elektromotors;

5. Schalten des Elektromotors als Generator zur Versorgung des elektrischen Bordnetzes des Kraftfahrzeuges bei Brennkraftmaschinenbetrieb und ggf. im Bremsbetrieb des Kraftfahrzeuges; und

6. Antrieb des Kraftfahrzeuges über die Brennkraftmaschine oder den Elektromotor ohne stufenloses Getriebe (Notbetrieb).

Besonders vorteilhaft ist ferner, wenn hinsichtlich ihres Übersetzungsverhältnisses unterschiedliche triebliche Verbindungen, z. B. Zahnräder, Ketten, etc. vorgesehen sind. Dabei kann die den Elektromotor zuschaltende Verbindung, bevorzugt ein erster Stirnradsatz, auf ein höheres Anfahrmoment und einen niedrigeren Geschwindigkeitsbereich ausgelegt sein, während die die Brennkraftmaschine zuschaltende triebliche Verbindung bzw. der betreffende Zahnradsatz optimal für höhere Geschwindigkeiten des Kraftfahrzeuges bis hin zu Kraftstoff sparendem Overdrive-Betrieb ausgelegt sein kann. Dieser trieblichen Verbindung wird regulär jeweils die Spreizung des stufenlosen Getriebes überlagert.

Ein ruckfreies Umschalten der Antriebsquellen bei geringem Kupplungsverschleiß wird ferner erzielt, wenn bei Synchrondrehzahl der zu kuppelnden Elemente die Kraftflußumkehr im stufenlosen Getriebe geschaltet wird. Diese Synchrondrehzahl liegt abhängig von den gegebenen Übersetzungsverhältnissen bei den trieblichen Verbindungen bei einem definierten Übersetzungsverhältnis des stufenlosen Getriebes vor und kann z. B. durch Drehzahlsensoren an den Getriebewellen mehr oder minder exakt ermittelt werden.

Die schaltbaren Kupplungen können formschlüssige Klauenkupplungen, Synchronkupplungen und/oder reibschlüssige Kupplungen sein, die abhängig von den baulichen Verhältnissen auf der Abtriebswelle und/oder den beiden anderen Getriebewellen angeordnet sind. Insbesondere im brennkraftmaschinenseitigen Kraftfluß sollte eine auch als Anfahrkupplung verwendbare Kupplung (Einscheiben-Trockenkupplung oder Lamellenkupplung) vorgesehen sein, um zumindest im Notfahrbetrieb ein Fahren des Kraftfahrzeuges auch über die Brennkraftmaschine zu ermöglichen.

Gemäß Patentanspruch 8 und folgende wird vorgeschlagen, die beschriebene Antriebsanordnung wie folgt zu betreiben:

Über eine elektronische Steuerung mit einem Leistungs-Sollwertgeber am Gaspedal wird bei Betätigen des Gaspedales geschwindigkeits- und/oder leistungsabhängig zunächst der Elektromotor angesteuert und das Anfahrmoment und die Geschwindigkeit durch entsprechende Stromregelung gesteuert.

Ab einer definierten Geschwindigkeit oder einer höheren Leistungsanforderung (Vollgas oder ggf. Kick-Down-Betätigung) wird die Brennkaftmaschine angekuppelt und aktiviert (gezündet) und deren Leistung ggf. bei gleichzeitigem Umschalten von Elektromotorbetrieb auf Brennkraftmaschinenantrieb (Umschaltung der kuppelbaren trieblichen Verbindungen bei gleichzeitiger Kraftflußumkehr im stufenlosen Getriebe) hochgeregelt. Dabei kann vorteilhaft der Elektromotor zusätzlich noch Leistung mit einspeisen oder aber bei geringerer Leistungsanforderung der Elektromotor zur Versorgung des elektrischen Bordnetzes des Kraftfahrzeuges auf Generatorbetrieb umgeschaltet werden.

Bevorzugt werden die unterschiedlichen Übersetzungen der trieblichen Verbindungen so ausgelegt, daß in Verkehrsbereichen mit Geschwindigkeitsbeschränkungen von z. B. 30 km/h unter Ausnutzung im wesentlichen dieser Geschwindigkeit nur elektromotorisch gefahren wird. Dadurch werden Betriebsphasen der Brennkraftmaschine mit im Wirkungsgrad ungünstigen Teillastbereichen sowie die Abgabe von Geräusch- und Abgasemissionen weitgehendst vermieden.

Mehrere Ausführungsbeispiele der Erfindung sind im folgenden mit weiteren Einzelheiten näher erläutert. Die schematische Zeichnung zeigt in

Fig. 1 eine Antriebsanordnung mit einer Brennkraftmaschine, einem Elektromotor, einem Umschlingungsgetriebe, einer Abtriebswelle und die Abtriebswelle mit dem Eingang oder dem Ausgang des Umschlingungsgetriebes kuppelbaren trieblichen Verbindungen;

Fig. 2 eine Antriebsanordnung gemäß Fig. 1, jedoch mit zwei auf der Abtriebswelle angeordneten Zahnrädern als kuppelbare triebliche Verbindungen;

Fig. 3 wiederum eine Antriebsanordnung gemäß Fig. 1 mit ebenfalls zwei auf der Abtriebswelle angeordneten Zahnrädern als triebliche Verbindungen, die über zwei Lamellenkupplungen kuppelbar sind; und

Fig. 4 eine Antriebsanordnung mit einer Brennkraftmaschine, einem Elektromotor, einem Toroidgetriebe, einer Abtriebswelle und mit die Abtriebswelle mit dem Eingang oder dem Ausgang des Torroidgetriebes kuppelbaren trieblichen Verbindungen.

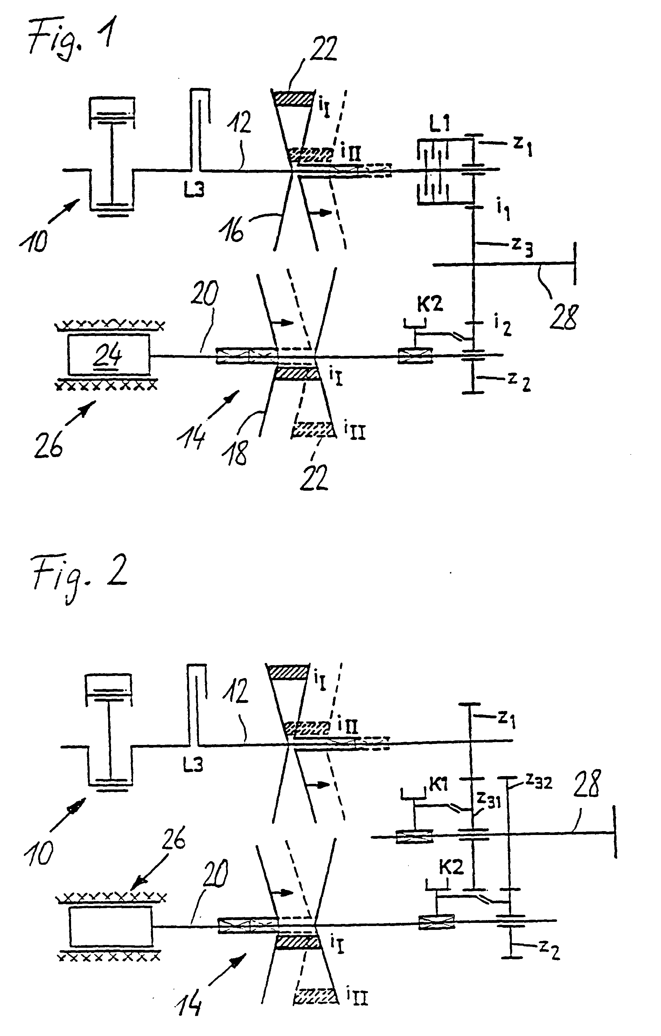

In der Fig. 1 ist mit 10 eine Brennkraftmaschine angedeutet, die über eine reibschlüssige Kupplung $L_3$

mit einer ersten Welle 12 des stufenlosen Umschlingungsgetriebes 14 verbunden ist.

Das Umschlingungsgetriebe 14 besteht in bekannter Weise aus einem ersten Wandlerelement bzw. Scheibenpaar 16 auf der Welle 12, einem zweiten Wandlerelement bzw. Scheibenpaar 18 auf einer parallel dazu angeordneten zweiten Welle 20 und einem die Scheibenpaare 16,18 verbindenden Umschlingungsmittel, z. B. einer Kette 22. Der Umschlingungsradius der Kette 22 ist dabei entsprechend verstellbar, wobei das Übersetzungsverhältnis $i_I$ bei der Kraftflußrichtung von Welle 12 zur Welle 20 ins "Schnelle" übersetzt, d. h. Welle 20 dreht schneller als Welle 12 und die Übersetzung $i_{II}$ bei dieser Kraftflußrichtung ins "Langsame" übersetzt, Welle 12 dreht schneller als Welle 20. Zwischen $i_I$ und $i_{II}$ ist die Übersetzung stufenlos verstellbar.

Bei der Kraftflußrichtung von Welle 20 zur Welle 12 ist die Übersetzung $i_I$ ins Langsame und $i_{II}$ ins Schnelle.

Auf die zweite Welle 20 des Umschlingungsgetriebes 14 wirkt direkt der Rotor 24 eines Elektromotors 26, der z.B. ein Drehstrommotor sein kann.

Auf der Welle 12 ist ferner ein Zahnrad $z_1$ kuppelbar über eine Lamellenkupplung $L_1$ gelagert, das mit einem Zahnrad $z_3$ auf einer parallel zu den Wellen 12,20 angeordneten Abtriebswelle 28 kämmt und damit eine kuppelbare triebliche Verbindung mit dem Übersetzungsverhältnis $i_1$ bildet.

Desgleichen ist auf der Welle 20 ein Zahnrad $z_2$ drehbar gelagert, das ebenfalls mit dem Zahnrad $z_3$ kämmt und über eine formschlüssige Klauenkupplung $K_2$ mit der Welle 20 kuppelbar ist. Das Zahnrad $z_2$ bildet mit dem Zahnrad $z_3$ eine zweite triebliche Verbindung mit dem Übersetzungsverhältnis $i'_2$.

Die Abtriebswelle 28 wirkt in bekannter Weise auf ein Differential eines nicht dargestellten Kraftfahrzeuges mit einem definierten Übersetzungsverhältnis $i_D$. Das Gesamtübersetzungsverhältnis des Kraftfahrzeuges ergibt sich somit aus

$$i_I \, (i_{II}) \times i_1 \times i_D$$

bei alleinigem Antrieb durch den Elektromotor (Kraftflußrichtung von Welle 20 auf Welle 12) und

$$i_{II} \, (i_I) \times i_2 \times i_D$$

bei Antrieb durch den Verbrennungsmotor und Kraftflußrichtung von Welle 12 auf Welle 20.

Die Funktion der beschriebenen Antriebsanordnung ist wie folgt:

Soll das Kraftfahrzeug angefahren werden, so sind die Kupplung $L_3$ und $K_2$ geöffnet und die Kupplung $L_1$ geschlossen. Die Steuerung der Kupplungen über entsprechende hydraulisch betätigbare Aktuatoren erfolgt über ein nicht dargestelltes elektronisches Steuergerät, welches auch die Leistungselektronik des Elektromotores 26 steuert und mit der Steuerung der Brennkraftmaschine 10 ebenfalls verbunden ist.

Wird über das nicht dargestellte Gaspedal und einem daran angeordneten elektronischen Sollwertgeber ein Anfahren des Kraftfahrzeuges gesteuert, so erfolgt der Kraftfluß von dem Rotor 24 des Elektromotores 26 über die Welle 20 auf das Umschlingungsgetriebe 14 und von diesem über das stufenlos veränderbare Übersetzungsverhältnis $i_I$ bis $i_{II}$ auf die Welle 12, von dieser über den Stirnradsatz $z_1$ und $z_3$ mit dem Übersetzungsverhältnis $i_1$ auf die Abtriebswelle 28. Da das Übersetzungsverhältnis $i_1$ relativ klein ist, wird das Antriebsmoment des Elektromotores 26 entsprechend verstärkt.

Beim Erreichen einer definierten Geschwindigkeit des Kraftfahrzeuges von z. B. 30 km/h (bei Vorwärtsfahrbetrieb) ist über das gerade vorliegende Übersetzungsverhältnis $i_{II}$ des Umschlingungsgetriebes 14 die unterschiedliche Übersetzung zwischen $i_1$ und $i_2$ ausgeglichen, so daß die Drehzahldifferenz zwischen der Welle 20 bzw. der Kupplung $K_2$ und dem mit dem Zahnrad $z_3$ der Abtriebswelle 28 kämmenden Zahnrad $z_2$ gleich Null ist, d. h., daß die Synchrondrehzahl erreicht ist. Es kann somit nahezu verschleißlos und ohne Schaltruck die Kupplung $K_2$ geschlossen werden.

Vor dem Schließen der Kupplung $K_2$ wird jedoch durch Schließen der Kupplung $L_3$ die Brennkraftmaschine aktiviert bzw. gezündet und deren Antriebsleistung gleitend auf die Welle 12 aufgeschaltet. Ein dabei ggf. auftretender unkomfortabler Umschaltruck kann durch entsprechende Ausregelung der Drehmomente in Verbindung mit dem Elektromotor 26 steuerungstechnisch ausgeglichen werden.

Nach Leistungsaufnahme der Brennkraftmaschine 10 und nach erfolgtem Schließen der Kupplung $K_2$ wird die Lamellenkupplung $L_1$ geöffnet, so daß nunmehr die Antriebsleistung von der Brennkraftmaschine 10 auf die Welle 12 und über das im Übersetzungsverhältnis $i_{II}$ laufende Umschlingungsgetriebe 14 auf die Welle 20 und über das nunmehr mit der Welle 20 verbundene Zahnrad $z_2$ mit dem Übersetzungsverhältnis $i_2$ auf die Abtriebswelle 28 übertragen wird. Über das nunmehr vorliegende Übersetzungsverhältnis, wobei gilt $i_1 < i_2$, treibt die Brennkraftmaschine mit verringerter Drehzahl bzw. mit längerer Übersetzung bis hinein in den Overdrive-Bereich, Übersetzungsstellung $i_I$ des Umschlingungsgetriebes 14, in kraftstoffsparender Weise das Kraftfahrzeug an.

Bei einer hohen Leistungsanforderung durch entsprechendes Betätigen des Gaspedales des Kraftfahrzeuges kann kurzfristig der Elektromotor 26 leistungserhöhend zugeschaltet werden. Andernfalls wird der Elektromotor 26 in an sich bekannter Weise als Generator geschaltet und liefert zumindest bei Leistungsüberschuß der Brennkraftmaschine 10 (insbesondere bei wirkungsgradungünstigem Teillastbetrieb) entsprechenden Strom in das Bordnetz bzw. die Antriebsbatterien des Kraftfahrzeuges.

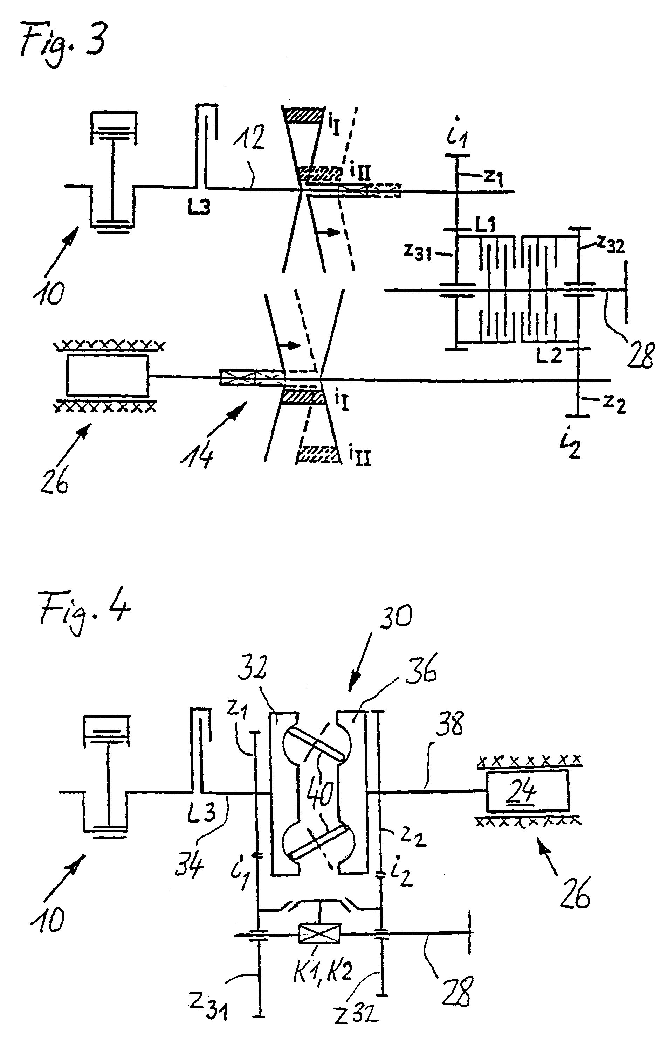

In den Fig. 2 und 3 sind alternative Ausgestaltungen der Antriebsanordnung gemäß Fig. 1 dargestellt. Funktionell gleiche Teile sind mit gleichen Bezugszeichen versehen.

So sind in den Fig. 2 und 3 anstelle eines Zahnrades $z_3$ auf der Abtriebswelle 28 zwei Zahnräder $z_{31}$ und $z_{32}$ angeordnet, die separat mit den Zahnrädern $z_1$ bzw. $z_2$ unter Bildung der Übersetzungsverhältnisse $i_1$ und $i_2$ zusammenwirken. Dadurch lassen sich die unterschiedlichen Übersetzungsverhältnisse zwischen $i_1$ und $i_2$ unter Berücksichtigung baulicher Gegebenheiten (Wellenabstände, etc.) besser verwirklichen.

Ferner kann gemäß Fig. 2 anstelle der Lamellenkupplung $L_1$ nach Fig. 1 eine formschlüssige Klauenkupplung $K_1$ verwendet sein, die zudem auf der Abtriebswelle 28 angeordnet ist.

Gemäß Fig. 3 können die Kupplungen $K_1$ und $K_2$ durch hydraulisch betätigte Lamellenkupplungen $L_1$ und $L_2$ gebildet sein, die zudem beide auf der Abtriebswelle 28 sitzen. Diese Ausführung ist deshalb von Vorteil, weil dann die Zuführung des die Lamellenkupplungen $L_1$ und $L_2$ beaufschlagenden Hydraulikmediums durch die Abtriebswelle 28 erfolgen kann, während für die Hydraulikzufuhr zu den Scheibenpaare 16, 18 die Wellen 12, 20 nutzbar sind.

Die Fig. 4 zeigt in Abwandlung zur Fig. 1 ein an sich bekanntes Toroidgetriebe 30 als stufenloses Getriebe, dessen eines Wandlerelement 32 mit der Brennkraftmaschine 10 über die Kupplung $L_3$ und die Welle 34 trieblich verbunden ist. Auf das andere Wandlerelement 36 wirkt direkt über die Welle 38 der Elektromotor 26.

Das Übersetzungsverhältnis $i_I$ bzw. $i_{II}$ wird in bekannter Weise über die in ihrer Anstellung verschwenkbaren Rollen 40 gesteuert.

Auf den Wellen 34,38 sind die die trieblichen Verbindungen zu der parallel angeordneten Abtriebswelle 28 herstellenden Zahnräder $z_1$ und $z_2$ angeordnet, die mit den über zwei formschlüssige Klauenkupplungen $K_1$, $K_2$ kuppelbaren Zahnrädern $z_{31}$ und $z_{32}$ auf der Abtriebswelle 28 kämmen. Dabei gilt wiederum die Beziehung $i_1 < i_2$.

Die Funktion der Antriebsanordnung gemäß Fig. 4 ist entsprechend der zu Fig. 1 beschriebenen. Während bei Verwendung eines Umschlingungsgetriebes 14 als stufenloses Getriebe sich eine Dreiwellenbauart mit den Wellen 12,20 und 28 ergibt, sind bei der Antriebsanordnung gemäß Fig. 4 konstruktionsbedingt durch das Toroidgetriebe 30 die Wellen 34,38 koaxial und lediglich die Abtriebswelle 28 parallel dazu ausgerichtet.

Die vorbeschriebenen Antriebsanordnungen sind nur skizzenhaft dargestellt. Gehäuse, Wellenlagerungen, etc. können bekannter Getriebetechnik entsprechen. Der Rückwärtsfahrbetrieb des Kraftfahrzeuges kann durch entsprechende Umpolung des Elektromotors 26 gesteuert werden, wobei ein nicht dargestellter Schalthebel oder Schalter vorzusehen ist. Die Geschwindigkeit des Kraftfahrzeuges im Rückwärtsfahrbetrieb kann über des elektronische Steuergerät auf z. B. 15 km/h begrenzt sein.

**Patentansprüche**

1. Antriebsanordnung, insbesondere für Kraftfahrzeuge, mit einer ersten Antriebsquelle, insbesondere einer Brennkraftmaschine, und einer zweiten Antriebsquelle, insbesondere einem Elektromotor, die auf ein stufenloses Getriebe als Geschwindigkeitswandler wirken, wobei die erste Antriebsquelle über eine Kupplung und die zweite Antriebsquelle direkt auf das Getriebe geschaltet sind, und wobei die erste Antriebsquelle (10) auf eine erste, ein Wandlerelement (16,32) des Getriebes (14,30) tragende Welle (12,34) wirkt, und eine Abtriebswelle (28) vorgesehen ist, die wahlweise mit der ersten Welle (12,34) oder der zweiten Welle (20,38) des Getriebes (14,30) kuppelbar ist,, **dadurch gekennzeichnet, daß**

   - die zweite Antriebsquelle (26) direkt auf eine zweite, das andere Wandlerelement (18,36) tragende Welle (20,38) wirkt.

2. Antriebsanordnung nach Anspruch 1, **dadurch gekennzeichnet, daß** die Abtriebswelle (28) über kuppelbare Zahnräder ($z_3, z_{31}, z_{32}$) mit der ersten Welle (12,34) oder der zweiten Welle (20,38) trieblich verbindbar ist.

3. Antriebsanordnung nach Anspruch 1 oder 2, **dadurch gekennzeichnet, daß** zwei in ihrer Übersetzung ($i_1, i_2$) unterschiedliche triebliche Verbindungen ($z_1, z_2$) vorgesehen sind, wobei $i_1 < i_2$ ist.

4. Antriebsanordnung nach Anspruch 3, **dadurch gekennzeichnet, daß** die Übersetzungsverhältnisse $i_1, i_2$ der trieblichen Verbindung so abgestimmt sind, daß bei einem definierten Übersetzungsverhältnis $i_I$, $i_{II}$ des stufenlosen Getriebes (14,30) eine Synchrondrehzahl an den jeweils kuppelbaren Antriebselementen beim Umschalten von $i_1$ auf $i_2$ oder umgekehrt vorliegt.

5. Antriebsanordnung nach Anspruch 2, **dadurch gekennzeichnet, daß** die Kupplungen ($L_n$ oder $K_n$) für die Zahnräder ($z_1, z_2$) benachbart den Wandlerelementen (16,18) des stufenlosen Getriebes (14) angeordnet sind.

6. Antriebsanordnung nach einem oder mehreren der Ansprüche 1 bis 5, **dadurch gekennzeichnet, daß** zumindest eine Kupplung ($K_n$ oder $L_n$) der schaltbaren Zahnräder ($z_1, z_2, z_{31}, z_{32}$) auf der Abtriebswelle (28) angeordnet ist.

7. Antriebsanordnung nach einem oder mehreren der Ansprüche 1 bis 6, **dadurch gekennzeichnet, daß** zumindest die Kupplung im Kraftfluß von der ersten Antriebsquelle (10) zur Abtriebswelle (28) eine reibschlüssige Kupplung ($L_3, L_2$) ist.

8. Verfahren zum Betreiben eines Kraftfahrzeuges mit einer Antriebsanordnung nach einem oder mehreren der Ansprüche 1 bis 7, **dadurch gekennzeichnet, daß** bei einem definierten Fahrbetrieb beim Betätigen des Gaspedales über eine elektronische Steuerung zunächst die zweite Antriebsquelle bzw. der Elektromotor (26) angesteuert und das Kraftfahrzeug bis zu einer definierten Geschwindigkeit angetrieben wird und daß bei darüber hinaus gehender Gaspedalbetätigung automatisch die erste Antriebsquelle bzw. die Brennkraftmaschine angekuppelt und in Betrieb gesetzt wird.

9. Verfahren nach Anspruch 8, **dadurch gekennzeichnet, daß** die Brennkraftmaschine (10) in gleitendem Übergang auf die am Gaspedal vorgegebene Leistungsanforderung hochgeregelt und zugleich der Elektromotor (26) zurückgeregelt und bei Bedarf auf Generatorbetrieb umgeschaltet wird.

10. Verfahren nach den Ansprüchen 8 und 9, **dadurch gekennzeichnet, daß** die definierte Geschwindigkeit für den nur elektromotorischen Betrieb einer in bestimmten Straßenverkehrsgebieten maximal erlaubten Geschwindigkeit, insbesondere etwa 30 km/h, entspricht.

**Claims**

1. A drive assembly for motor vehicles with an internal combustion engine and an electric motor which actuate an infinitely variable transmission as speed converter, the internal combustion engine being engaged by way of a clutch and the electric motor being engaged directly on the transmission, the internal combustion engine (10) actuates a first shaft (12, 34) bearing a first converter element (16, 32) of the transmission (14, 30), a driven shaft (28) is provided which is coupled alternatively to the first shaft (12, 34) or to the second shaft (20, 38) of the transmission (14, 30) **characterized in that**:

   - the electric motor (26) actuates directly a second shaft (20, 38) bearing a second converter element (18, 36) of the transmission

2. A drive assembly as described in claim 1, wherein the driven shaft (28) is coupled to the first shaft (12, 34) or to the second shaft (20, 38) by way of connectable gears ($Z_3, Z_{31}, Z_{32}$).

**3.** A drive assembly as described in claim 1 or 2, wherein two propulsive connections ($Z_1$, $Z_2$) differing in transmission ratio ($i_1$, $i_2$) are provided, $i_1 < i_2$ being applicable.

**4.** A drive assembly as described in claim 3, wherein the transmission ratios $i_1$, $i_2$ of the propulsive connection are coordinated so that, with a specific transmission ratio $i_I$, $i_{II}$ of the infinitely variable transmission (14, 30), a synchronized speed value of the pertinent connectable drive elements is established on shifting from $i_1$ to $i_2$, or from $i_2$ to $i_1$.

**5.** A drive assembly as described in claim 2, wherein couplings ($L_n$ or $K_n$) for the propulsive connections ($Z_1$, $Z_2$) are mounted adjacent to the converter elements (16, 18) of the infinitely variable transmission (14).

**6.** A drive assembly as described in claim 1 - 5, wherein at least one coupling ($K_n$ or $L_n$) of the connecting gears ($Z_1$, $Z_2$, $Z_{31}$, $Z_{32}$) and propulsive connections is mounted on the driven shaft (28).

**7.** A drive assembly as described in claim 1 - 6, wherein at least one coupling in the force flow from the internal combustion engine (10) to the driven shaft (28) is a frictionally engaged coupling ($L_1$, $L_2$).

**8.** A process for operating a motor vehicle having an internal combustion engine engaged with an infinitely variable transmission via a clutch to actuate a first shaft, an electric motor directly engaged on the transmission to actuate a second shaft and a driven shaft that is alternatively engaged to the first or second shafts, as described in claim 1 - 7, wherein,

when a gas pedal for the vehicle is actuated in a first operating mode, the electric motor (26) is actuated and the driven shaft is engaged with the second shaft to propel the vehicle up to a predetermined speed, and

when the gas pedal is actuated to propel the vehicle beyond the predetermined speed in a second operating mode, the internal combustion engine is actuated and the driven shaft is engaged with the first shaft to propel the vehicle.

**9.** A process described in claim 8, wherein the internal combustion engine (10) will be controlled smoothly on the required power of the accelerator pedal and that the speed of electrice engine (26) will be reduced and eventually switched to a generating device.

**10.** A process as described in claim 8 and 9, wherein the predetermined speed defined for exclusive electromotive operation corresponds to a maximum speed permitted in specific street traffic areas.

**Revendications**

**1.** Disposition d'entraînement, en particulier pour des automobiles, avec une première source motrice, en particulier un moteur à combustion, et une deuxième source motrice, en particulier un moteur électrique, qui agissent sur une transmission à réglage continu comme variateur de vitesse, où la première source motrice (10) (10) agit sur un premier arbre (12, 34), portant un élement variateur (16, 32) de l'engrenage (14, 30) et un arbre entraîné (28) est prévu, qui peut être embrayé facultativement avec le premier arbre (12, 34) ou le deuxième arbre (20,38) de la transmission à réglage continu (14, 30), marqué par le fait que

- la deuxième source motrice (26) agit directement sur un deuxième arbre (20,38), qui porte l'autre élement variateur (18,36) de la transmission à réglage continu

**2.** Disposition d'entraînement selon spécification 1du brevet, marqué par le fait que l'arbre entraîné (28) peut être connecté de façon motrice avec le premier arbre (12,34) ou le deuxième arbre (20,38) par des roues dentées à embrayer ($z_3$, $z_{31}$, $z_{32}$)

**3.** Disposition d'entraînement selon les spécifications 1 ou 2 du brevet, marqué du fait que deux différentes connexions motrices ($z_1$, $z_2$), en ce qui concerne leur rapport de transmission ($i_1$, $i_2$), sont prévues, la relation étant $i_1 < i_2$.

**4.** Disposition d'entraînement selon spécification 3 du brevet, marqué par le fait que les rapports de transmission $i_1$, $i_2$ de l'assemblage motrice sont accordés de telle sorte qu'il existe un régime synchrone auprès des éléments moteurs en manoeuvrant de $i_1$ à $i_2$ ou inversement, étant donné un rapport de transmission défini $i_I$,$i_{II}$ de la transmission à réglage continu (14,30).

**5.** Disposition d'entraînement selon spécification 2 du brevet, marqué par le fait que les embrayages ($L_n$ ou $K_n$) pour les roues dentées ($z_1$, $z_2$) sont disposés à côté des éléments variateurs (16,18) de la transmission à réglage continu (14).

**6.** Disposition d'entraînement selon une ou plusieures des spécifications 1 à 5 du brevet, marqué par le fait qu' au moins un embrayage ($K_n$ ou $L_n$) des roues dentées manoeuvrables ($z_1$, $z_2$, $z_{31}$, $z_{32}$) est disposé sur l'arbre entraîne (28).

**7.** Disposition d'entraînement selon une ou plusieures des spécifications 1 à 6 du brevet, marqué par le fait qu'au moins l'embrayage situé dans le flux de puissance de la première source motrice (10) à l'arbre commandé (28) est un embrayage à friction ($L_3$, $L_2$).

8. Une procédure d'actionner une automobile avec une disposition d'entraînement selon une ou plusieures des spécifications 1 à 7 du brevet, marqué par le fait que, pour un actionnement défini, la deuxième source motrice ou bien le moteur électrique (26) est d'abord commandé en actionnant l'accélérateur par une commande électronique, et l'automobile est actionné jusqu'à une vitesse définie. Lors qu'on appuie sur l'accélérateur de plus, la première source motrice ou bien le moteur à combustion est embrayé et activé automatiquement.

9. Une procédure selon spécification 8 du brevet, marqué par le fait que l'activité du moteur à combustion (10) est augmentée en transition glissante à la demande de puissance donnée auprès de l'accélérateur et en même temps l'activité du moteur électrique (26) est diminuée et le moteur électrique est commuté en actionnement générateur.

10. Une procédure selon les spécifications 8 et 9 du brevet, marqué par le fait que la vitesse définie pour l'actionnement électromotrice correspond à la vitesse maximale admise dans certaines zones de trafic, en particulier à environ 30 km/h.

EP 1 085 994 B1

Fig. 1

Fig. 2

8

Fig. 3

Fig. 4